# EUROPEAN PATENT SPECIFICATION

(11) **EP 2 209 747 B1**
(45) Date of publication and mention of the grant of the patent: **18.03.2015**
(21) Application number: 08837496.2
(22) Date of filing: 06.10.2008
(51) Int. Cl.: C02F 3/06, C02F 3/12, C02F 3/30

(54) **A PLANT FOR WASTE WATER TREATMENT**
ANLAGE ZUR ABWASSERBEHANDLUNG
INSTALLATION POUR LE TRAITEMENT D'EAUX USÉES

(30) Priority: 08.10.2007 DK 200701448
(43) Date of publication of application: 28.07.2010
(73) Proprietor: Biokube International A/S, 4733 Tappernøje (DK)
(72) Inventor: HEDEGAARD, Henrik, U., DK-4640 Fakse (DK)
(74) Representative: Zacco Denmark A/S
(86) International application number: PCT/EP2008/063345
(87) International publication number: WO 2009/047230

(56) References cited:
- WO-A-2005/026064
- FR-A- 2 826 952
- US-A- 3 412 864

## Description

The present invention relates to a plant unit for water purification which plant unit is placed downstream of a settling tank.

### Background of the invention

During the latest decade there has been an increased focus on the purification of waste water from urban and industrial activity prior to leading it back to nature. Numerous private housings are not connected to public sewer systems and their waste water is therefore not treated in a public purifying plant. Instead these housings rely on their individual solutions on the purification issue.

A common individual solution is in form of a septic tank in which an anaerobic fermentation process at low temperatures purifies the waste. This process however takes a significant time and the outflow is often discharged to some kind of percolation through the ground, e.g. a seepage pit, or through a drainage tube into the nearest lake or stream without removal of nitrogen and phosphorous.

In Denmark alone over 300.000 housings only rely on a septic tank as waste water treatment. Recent demands from the authorities force these housings to provide improved purification of their waste water. Among others there are focus on organic compounds, phosphorous compounds and nitrogen containing compounds.

The phosphorous compounds are often removed by an oxidative precipitation in which chemicals are added to the waste water and oxidize the phosphorous compounds to phosphates which are precipitated as sparingly soluble salts. The phosphorous compounds are normally either precipitated in a separate tank or in the septic tank or optionally in a compartment in the septic tank as disclosed in JP 1997 004 1289.

WO 05/026064 describes another individual solution for purification of waste water. The plant according to this application is a small purification plant 5-500 EP of the type "submerged aerated bio filter plant", and the load on the plant can take place time wise proportionally, and/or that denitrification can take place simultaneously with phosphorous precipitation, where a pre-precipitation tank (septic tank) participates in the process. The method according to the application comprises the following steps:
a) storing waste water
b) optionally removing phosphorous compounds
c) leading the waste water to a first aerated biodegrading zone
d) leading waste water from the first aerated to a second aerated biodegrading zone to obtain purified water
e) leading purified water to step a); or to step a) and/or step b) if step b) is present.

According to this method H₂S is kept at a minimum, the necessary amount of chemicals used in phosphorous removal is reduced, an improved nitrification occurs and the purification is improved during start up after a longer break.

The control of the process of WO 05/026064 is constructed in such manner that the day load on the plant is distributed evenly over all the 24 hours of the day. The entire process takes place in two or more separate compartments. In one embodiment a small, and normally constant amount of water, preferably 3-7 times the aggregate day consumption of the household, is passed from the last chamber in the last section to the septic tank. As the water from the last chamber is very nitrate-containing, a denitrification will be obtained in the septic tank due to the anaerobic conditions and freely available carbon. The high redox number from the nitrate containing water improves the phosphorous precipitation, with resultant less consumption of chemicals. The precipitated phosphorous stays in the septic tank, and does not disturb the biological processes in the purification plant. A typical volume of a vessel or a section for use in connection with the preferred small plant will lie between 400 litres and 25 m³. The diameter of the vessel is normally around 200 cm and the height of the vessel is around 145 cm. The vessel is positioned in a depth at around 120 cm. The interior of the vessel or section is divided into a purification portion and a settling portion. A diffuser, or other air distributing unit distributing the air provided in the aerated sections of the vessel, is positioned under each filter element.

The document US 3 412 864 discloses a sewage treatment plant including an aeration chamber comprising upper and lower rooms with a partition therebetween. The lower room has an inlet for receiving liquid sewage and the upper room has an outlet for treated sewage.

The document FR 2 826 952 discloses a purification system for waste water comprising a receptacle provided with a cover having a man hole, the system also comprises one or more aeration systems and supports for aerobe bacterias. The supports for aerobe bacterias can be placed in the receptacle via the man hole of the cover.

The object of the present invention is to provide a plant which has a similar functionality as the above described plant, i.e. works by a similar method, and at the same time has reduced power consumption and a reduced diameter which facilitates handling of the cover.

The reduced power consumption and the reduced diameter are both a result of the new and inventive construction, as the longer slimmer shape compared to the known units result in a better transfer of oxygen from air to water. Further the purification unit according to the invention provides the advantage of having a receiving section which is placed very deep and which does not collapse due to pressure from ground water as the outer walls of the unit forms the outer walls of the receiving section and as these walls are able to withstand a large pressure. The walls in the lower section has to have a considerably strength as it will be carrying around 1.6 tons when it is working and is more or less filled with liquid.

Further, for a small plant it has turned out to be of significance for the purification efficiency that the first aerated compartment is larger than the second aerated compartment. An optimum is reached when the first compartment holds around 2/3 of the liquid content of the aerated compartments.

### SUMMARY OF THE INVENTION

The invention relates to a purification plant for purifying waste water comprising a septic tank and a purification unit consisting of an upper part comprising two separated aerated compartments i.e. a first and a second compartment provided with bio filters and two separated sedimentation compartments, a first and a second, placed down-stream respectively of the first and second aerated compartments. The purification unit has a lower part placed below one or both aerated compartments which lower part comprises a receiving section provided with an inlet holding low-oxygen containing waste water from the septic tank.

The receiving section is placed up-stream of the first aerated compartment and comprises and outlet combined with means for transporting liquid to the first aerated compartment. All liquid from the first aerated compartment enters into the first sedimentation compartment just as all liquid from the second aerated compartment enters into the second sedimentation compartment. Sludge might be removed from the lower part of the compartments and transported to the septic tank or another receiver.

According to the invention the first aerated compartment contains 55 to 85 vol% of the liquid volume of the total amount of liquid in the two aerated compartments. Normally, the first aerated compartment contains 64-70 vol% of the liquid volume of total amount of liquid in the aerated compartments and the second compartment contains 30-36 vol% of the liquid volume of total amount of liquid in the aerated compartments.

According to one embodiment the purification unit is constructed as a closable box comprising an open container with a removable cover. E.g. the container comprises an outer wall having an inner surface which inner surface is in direct contact with the waste water to be purified and the container can be provided with at least one inner wall forming at least two completely separated wet compartments. This construction is very simple and decreases costs when producing a purification unit.

According to one embodiment the material forming the outer wall of the upper part also forms the outer wall of the lower part.

According to one embodiment the lower part is provided as an open room between the bottom of the upper part and the bottom of the purification unit.

According to one embodiment the receiving section of the lower part consist of more than 75 vol% of the lower part.

According to one embodiment the first aerated compartment (6) is provided with an inlet for liquid near the top of the compartment and an outlet near the bottom of the compartment, the first sedimentation compartment (7) is provided with an inlet at the bottom of the compartment and an outlet near the top of the compartment, the second aerated compartment (9) is provided with an inlet for liquid near the top of the compartment and an outlet near the bottom of the compartment, and the second sedimentation compartment (10) is provided with an inlet at the bottom of the compartment and an outlet (4a) near the top of the compartment.

According to one embodiment the smallest cross-direction of the removable cover is less than 150 cm, normally it is less than 120 cm.

According to one embodiment the purification unit comprises a raising compartment through which the liquid from the receiving section of the lower part is transported to a high level of the first aerated compartment.

According to one embodiment the purification plant comprises means for phosphorous precipitating comprising recycling means (3) for recycling water containing oxygen or oxygen containing compounds to the pre-precipitation tank or if a phosphorous precipitation unit is present to either the pre-precipitation tank or the phosphorous precipitation unit

The purification unit comprises a dry compartment for holding power consuming devices which should remain dry such as compressors, valves, motors or the like.

### Brief description of the drawings

The invention is now described in more detail with reference to the drawings showing a preferred embodiment of the invention.

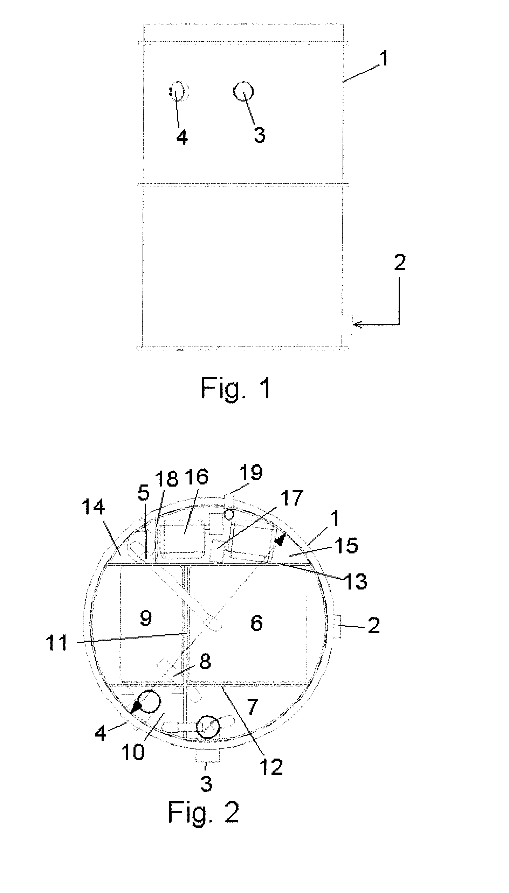

Figure 1 shows an embodiment of a purification unit in a side view from the outside.
Figure 2 shows the same embodiment as fig. 1 seen from above without the removable cover.

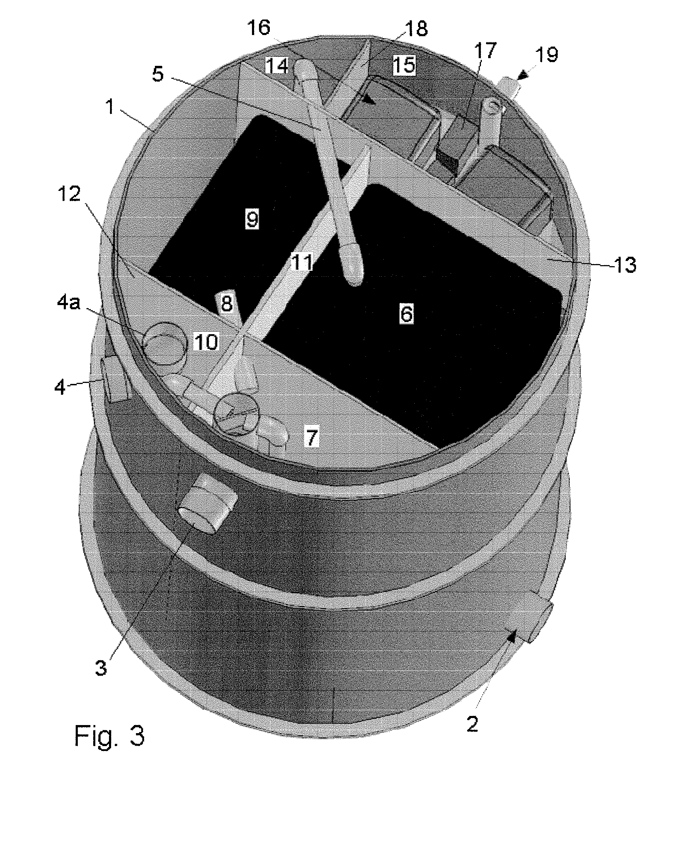

Figure 3 shows a top/side view of the same embodiment as shown in fig. 1 and 2 without the removable cover and without liquid content.
Figure 4 shows a second embodiment of the purification unit provided with top mounted diffusers in a top/side view with a transparent outer wall.
Figure 5 shows top view of an embodiment of the unit without any content such as bio filters, diffusers, compressors or the like.
Figure 6, 7 and 8 shows different views of the embodiment of figure 5.

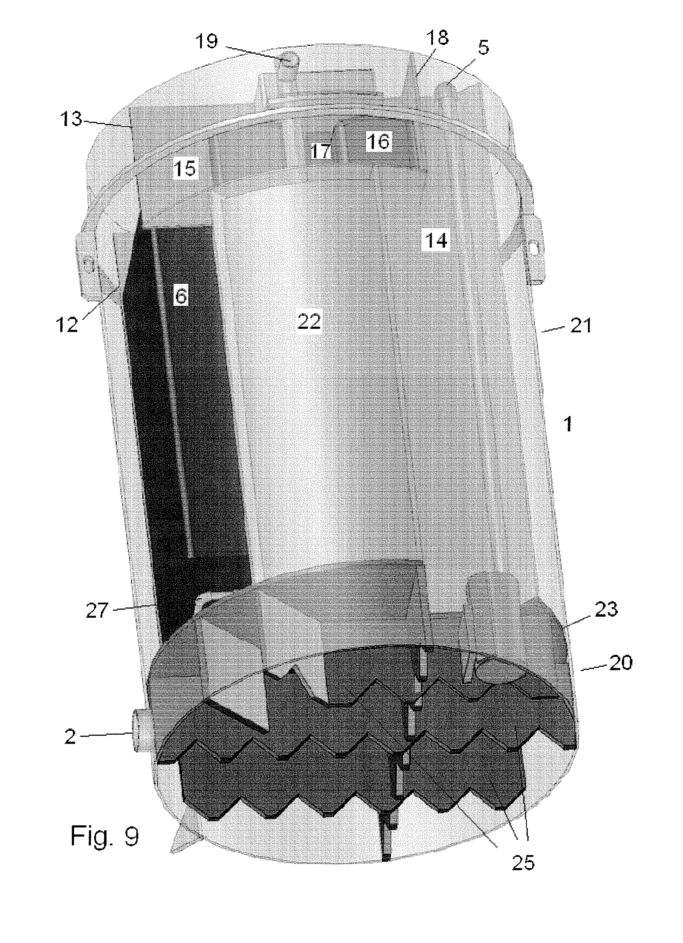

Figure 9 shows a three-dimensional side view of and embodiment provided with both walls and content. The embodiment is provided with transparent outer walls.

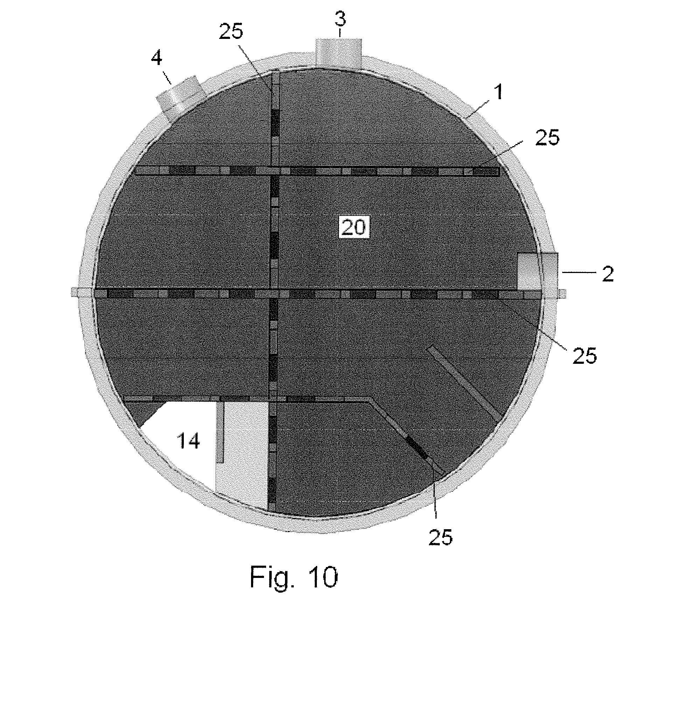

Figure 10 shows a view from the bottom side of the embodiment of figure 9.

### Detailed description of the present invention

The purification plant according to the present invention comprises a small purification unit of the kind comprising a submerged aerated bio filter; the plant has a capacity of between 5 and 10 person equivalents (PE). 1 PE corresponds to 150 litres of wastewater pr 24 hours. The unit is placed downstream of a septic tank; thereby the main part of the biological material is separated from the waste water and at least partly decomposed before the waste water enters the purification unit for a preliminary decomposition of organic material followed by nitrification. In order to entail a more stable purification process the purification unit is normally separated in at least two aerated zones with bio filters, this provide a stable process as the nitrifying bacteria so to speak get their own bio filter section after the organic material has been decomposed and the sludge has settled. The purification unit can be in form of a separate unit which can be connected to an already existing septic tank or a continuation of an already positioned purification unit.

The embodiments of the purification unit shown in the accompanying figures shows a container which when it is dug down in the ground will be provided with a removable cover. The container comprises an upper section being divided into several vertically separated compartments provided by placing partitions within an outer wall. The outer wall shown in the figures are round but could have any form providing a suitable volume and surface area. Further the unit comprise a lower section providing a pumping well i.e. a reservoir acting as a buffer and making it possible to provide the bio filters with a continuous flow of waste water 24 hours a day, the lower section will normally be placed in a space created below the upper section by a double bottom but the lower section need not cover the full area of the upper section.

In a preferred embodiment a phosphorous precipitation unit is included in the septic tank, and normally an oxidizing and/or precipitation agent is use in the phosphorous precipitation unit. The unit will normally be provided with means for controlling the amount of oxidizing agent added to the phosphorous precipitating unit taking into account the content of nitrate in the recycled purified water. In one embodiment, a sub flow of the purified waste water present in the last sludge precipitation vessel is passed back to the septic tank inlet. To this sub flow is added phosphorous precipitation chemicals, and now simultaneous denitrification and phosphorous precipitation take place in the septic tank. In one embodiment the precipitation of phosphorous compounds is carried out in the septic tank itself thus removing the phosphorous compounds without using an individual phosphorous precipitating unit. Phosphorous removal is preferably performed by oxidizing phosphorous compounds to phosphate and then phosphate is precipitated as a poorly soluble salt. The oxidizing agent is an external agent added to the system. Water from the nitrification zone is rich in nitrate which is an oxidizing agent and by recycling purified water to the phosphorous removing step the amount of external agent can be reduced. This lowering of the amount of external oxidizing agent is possible because the nitrate from the purifying unit takes part in the process. A positive side effect of the use of nitrate as oxidizing agent is that some of the nitrate is reduced to nitrogen which results in a reduction of the amount of nitrate discharged into the surroundings.

Normally the septic tank works under anaerobic conditions, this means that H₂S normally is produced in the septic tank. When constant amounts of nitrate containing water are transferred to the septic tank the conditions in the septic tank become anoxic instead of anaerobic which means that the micro organisms in the septic tank stop producing H₂S and start to convert nitrate to nitrogen.

The unit can have means for recycling sludge precipitated in or after the bio sections to the septic tank. The means can be in form of a pump e.g. a mammoth pump pumping sludge containing liquid from the bottom of one or more aerated sections 6, 9 to a return outlet 3.

Also the unit can comprise a controlling unit for controlling the amount and/or intervals of recycling treated water returned to the septic tank and/or the phosphorous precipitating unit, thus allowing optimal running of the plant. Thus it is secured as described in further details below that the H₂S does not accumulate and the bacteria are not starved. The advantage of such a control is also, that the treatment of waste water is extended to essentially 24 hours a day in stead of only the hours where water is lead to the unit e.g. in the morning and in the evening.

Suitable filter materials that are not easily blocked are e.g. tubes spun from plastic strings or filter materials available as Biokblok filter materials. In one embodiment the bio filter used in the present invention is a Bioblok filter such as Bioblok 100 having a surface area of 100 m²/m³ or a Bioblok 150 having a surface area of 150 m²/m³.

### Detailed description of the preferred embodiments

The purification unit comprises an outer wall 1 having two outlets, a return outlet 3 for returning cleaned liquid to a pre-precipitation tank placed upstream of the unit and an outlet 4 for leading cleaned liquid to a recipient, and one inlet 2 to receive waste water which has been subjected to pre-precipitation. Through the inlet 2 the liquid from a not shown septic tank enters a reservoir placed in the lowest part 20 of the purification unit. For a 5-10 PE unit the pumping well will normally have a volume of 180 - 400 litres. The relatively large volume of the reservoir is an advantage as this makes it possible to have a steady circulation of liquid in the purification unit.

The liquid from the not shown septic tank is normally transported into the pumping well by gravity and as heavy components in the water to be purified should be allowed to settle in the septic tank, the liquid is removed from the upper or middle part of the septic tank where a liquid fraction is available. The liquid will have a certain content of organic material and it will also have a certain content of nitrogen and phosphorous thus depending on the origin of the waste water. The inlet 2 of the purification unit will normally be placed more than 90 cm below the ground surface, normally even more than 120 cm below the ground surface. The relatively low placing of the pumping well is an advantage as this makes it possible for the sewer contractor to establish a direct gravitational transfer of liquid from the septic tank to the unit. If a direct gravitational transfer is not possible due to an inadequate height difference between the outlet of the septic tank and the inlet of the pumping well, then a separate pumping well has to be placed downstream of the septic tank and a pump has to transfer the liquid from the separate pumping well to the reservoir of the unit.

A pump provides for transport of the liquid from the reservoir to a first aerated compartment 6. Liquid from the pumping well is transported through the pipe 5 and enters the first section 6 at the top. The first aerated compartment 6 is provided with a bio filter e.g. be a Bioblok 100 having a surface area of 100 m²/m³. In one embodiment the first aerated compartment holds around 65 vol% of the total volume of liquid in the compartments containing bio filters, i.e. the first 6 and the third compartment 9, and normally it will hold at least 60 vol% or at least more than 55 vol%. The first aerated compartment 6 mainly houses heterotrophic bacteria i.e. bacteria requiring complex organic compounds of nitrogen and carbon for metabolic synthesis, i.e. in the first section 6 mainly organic matter is decomposed. The bio filter is aerated by a diffuser mounted under the filter element and the diffuser at the same time ensures the addition of oxygen and the circulation of the waste water through the filter so that contact is established between the waste water and the bacteria of the filter skin.

The liquid leaves the first aerated compartment 6 through or below a partition wall 12 separating the first 6 and the second compartments 7. Sludge from the biological processes falls to the bottom of the first aerated compartment 6 and the sludge will be transported into the second compartment 7 with the flowing liquid. According to one embodiment the partition wall 12 does not reach the bottom which provides an opening in the full length of the part of the wall 12 separating the first aerated compartment 6 from the second compartment 7. From the second compartment 7, sludge can be returned to the septic tank inlet via the return outlet 3 by means of a pump system, e.g. a mammoth pump.

The second compartment 7 is not provided with a bio filter, it is used to separate sludge from the liquid as the liquid rises up through the second compartment 7.

From the second compartment 7 the liquid is transferred to the second aerated compartment 9 via the overflow pipe 8 thereby entering the second aerated compartment 9 at the top. The second aerated compartment 9 is also provided with a bio filter such a bio filter can e.g. be a Bioblok 150 having a surface area of 150 m²/m³. In one embodiment the second aerated compartment holds around 35 vol% of the total volume of liquid in the compartments containing bio filters, i.e. the first 6 and the second aerated compartment 9, and normally it should hold at least 25 vol%. The second aerated compartment 9 mainly houses autotrophic bacteria i.e. bacteria requiring only carbon dioxide or carbonates as a source of carbon and a simple inorganic nitrogen compound for metabolic synthesis of organic molecules, i.e. in the second compartment 9 which is aerated the main process is the biological conversion of organic nitrogen into nitrate. Also this bio filter is according to this embodiment aerated by a diffuser mounted under the filter element.

The waste water leaves the second aerated compartment 9 at or near the bottom through or below the partition wall 12 which also separates the third 9 and the fourth compartments 10. Sludge from the biological processes falls to the bottom of the second aerated i.e. the third compartment 9 and is transferred to the fourth compartment 10 as described for the transferral between the first and second compartments. Also at this position in the shown embodiment the partition wall 12 does not reach the bottom but provides an opening in the full length of the part of the wall 12 separating the third compartment 9 from the fourth compartment 10. From the fourth compartment 10 the sludge can be returned to the septic tank via the return outlet 3 by means of a pump system such as a mammoth pump.

Liquid is removed from the fourth compartment 10 through the outlet 4 by overflow through an overflow outlet pipe 4a. The inlet height of the overflow outlet pipe 4a defines the normal height of liquid in the purification unit as all four compartments 6, 7, 9 and 10 are in liquid contact.

A part of the stream from the outlet 4 can be recycled to the septic tank or a separate phosphorous removing unit in order to remove phosphorous from the waste water as described in WO 2005/026064.

The diffusers get its supply of air through pipes 13 said pipes being connected to a compressor placed in a dry compartment 15.

The partition wall 11 respectively completely separates the aerated compartments 6 and 9 and the sedimentation compartments 7 and 10. The only opening through this partition wall 11 is the overflow pipe 8 which transfers liquid from compartment 7 to compartment 9.

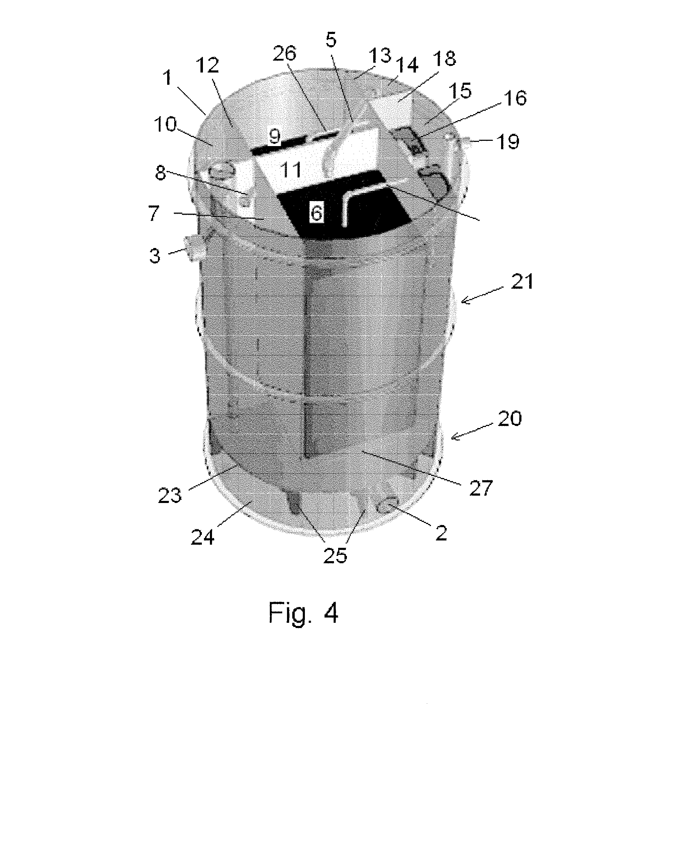

Figure 4 shows a view of an embodiment of the purification unit seen in a three-dimensional upper/side view. The outer wall 1 is made transparent in order to make it possible to see the inside of the device. The inlet 2 is placed in the lower part 20 between the upper and lower bottoms 23 and 24. When the liquid has entered through the inlet 2 it is received in the reservoir where it stays until it is transported to the first aerated compartment 6. Normally between 5 and 15 litres of liquid is pumped to the first aerated compartment 6 every 10 to 20 minute. The liquid is pumped through the pipe 5 and the vertical part of pipe 5 is placed in compartment 14 while a horizontal part of the pipe 5 leads from the compartment 14 to the top of the first aerated compartment 6. Two air pipes 26 deliver air from a compressor to two diffusers each placed beneath the bio filter in the first 6 and the second 9 aerated compartments. After entering at the top of the first aerated compartment, the liquid passes down through the compartment and passes beneath the partition wall 12 into the second i.e. the first non-aerated compartment 7. The liquid rises up through the second compartment and at the top end of the second compartment the overflow pipe allows the liquid to flow into the third compartment 9. In the third compartment 9 i.e. the second aerated compartment the liquid again in counter current with the air bubbles from the not shown diffuser flows down through the compartment. Hereafter the liquid again passes under the partition wall 12 into the fourth compartment 10 wherefrom it passes over the edge of the overflow outlet pipe 4a into the outlet 4 and is led to a recipient.

Sludge and liquid from the lower part of the second compartment 7 is pumped to the upper end of the return outlet 3 wherefrom it flows back to the septic tank.

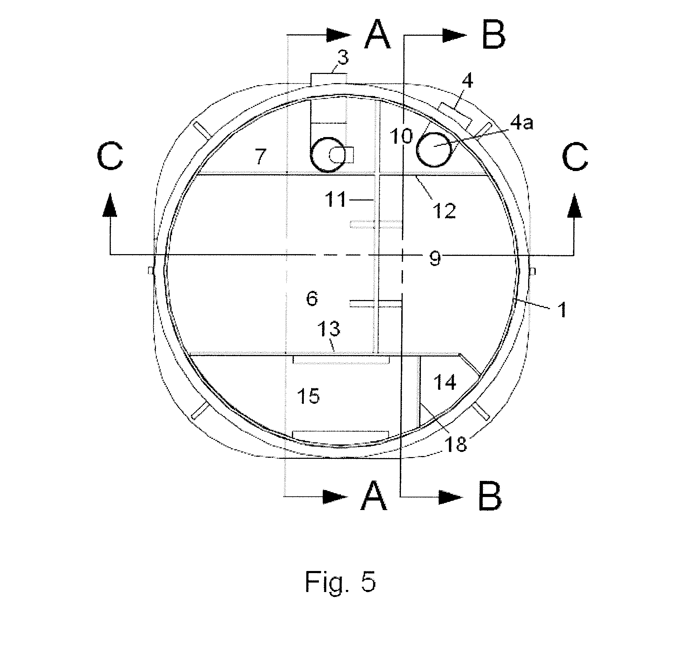

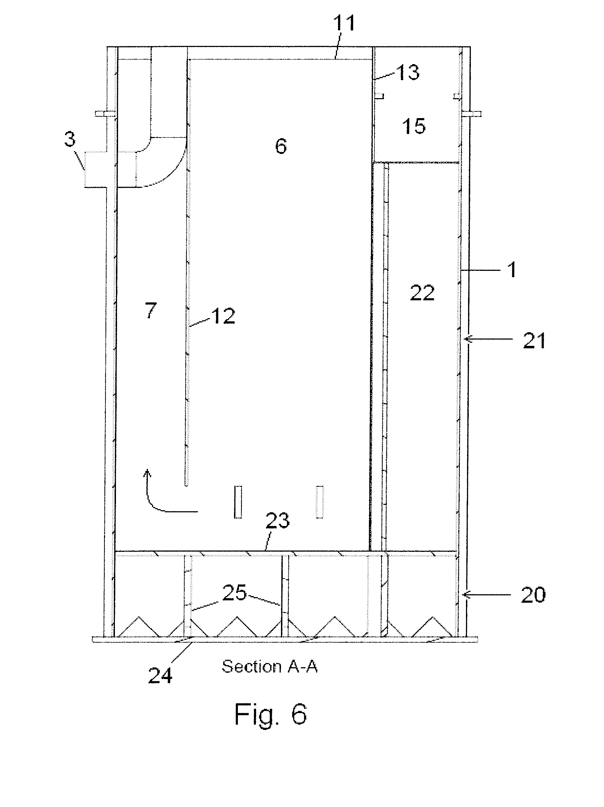

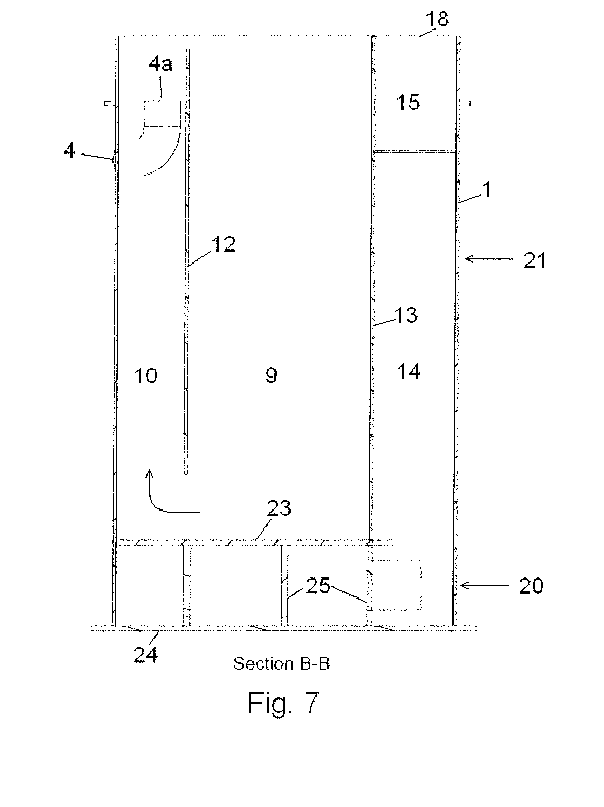

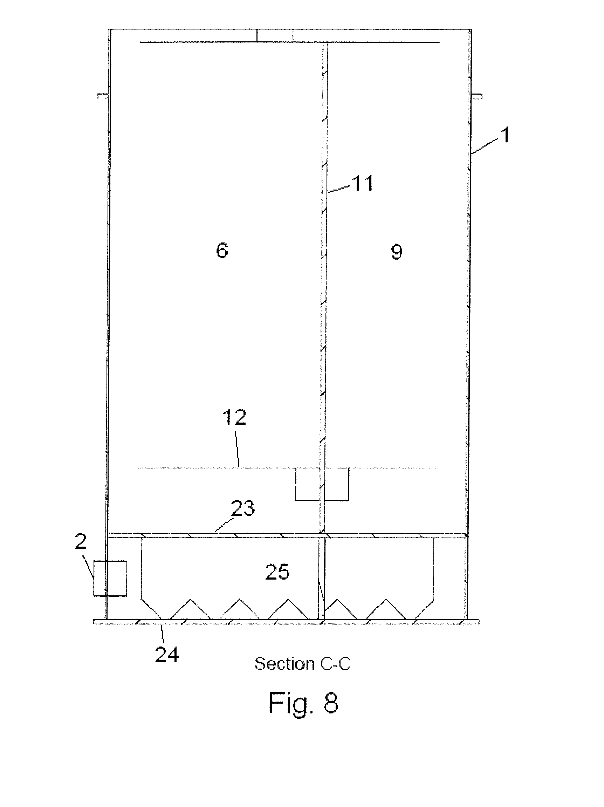

Figure 5 shows a top view of the purification unit. The line A-A shows which cut can be viewed in fig. 6, the line B-B shows which cut can be viewed in fig. 7 and the line C-C shows which cut can be viewed in fig. 8.

The top view of fig. 5 shows how the six upper compartments 6,7,9,10,14 and 15 are placed in relation to each other. The partition walls 11, 12, 13 and 18 can be welded directly to the outer wall 1 of the purification unit and to each other in order to form liquid tight compartments.

Figure 6 shows the view seen at the cut along line A-A. From this view it is possible to see one of the bearing walls 25 from the side showing triangular openings along the lower bottom which openings in the bearing walls 25 allows the liquid which enters through the inlet 2 to diffuse into the whole volume of the reservoir provided between the upper bottom 23 and the lower bottom 24. Also in fig. 6 it is possible to see the tank 22 for phosphorous precipitation agent which is placed below the second dry compartment 15.

Figure 7 shows the view seen at the cut along line B-B. From this view it is possible to see the length of the first dry compartment 14 which is placed below the second dry compartment 15. Also the view shows the overflow outlet pipe 4a which upper edge determines the height of liquid inside the purification unit.

Figure 8 shows the view seen at the cut along line C-C. From this view it is possible to see the lower edge of the partition wall 12 separating the two aerated compartments 6 and 9 from the non-aerated compartments 7 and 10.

| Ref. number | Name |
|---|---|
| 1 | Outer wall of purification unit |
| 2 | Inlet to unit |
| 3 | Return outlet |
| 4 | Outlet |
| 4a | Overflow outlet pipe |
| 5 | Pipe from pumping well to first compartment |
| 6 | First compartment i.e. first aerated compartment |
| 7 | Second compartment i.e. first non-aerated compartment |
| 8 | Overflow pipe |
| 9 | Third compartment i.e. second aerated comoartment |
| 10 | Fourth compartment i.e. second non-aerated comoartment |
| 11 | Partition wall separating compartments 6/9 and compartments 7/10 |
| 12 | Partition wall separating compartments 6/7 and compartments 9/10 |
| 13 | Partition wall separating compartments 6 and 9 from dry compartments 14 and 15 |
| 14 | First dry compartment |
| 15 | Second dry compartment |
| 16 | Compressor |
| 17 | Valve |
| 18 | Partition wall separating raising compartment and mechanics compartment |
| 19 | Inlet for phosphorous precipitation agent |
| 20 | Lower part |
| 21 | Upper part |
| 22 | Tank for phosphorous precipitation agent |
| 23 | Upper bottom |
| 24 | Lower bottom |
| 25 | Bearing walls |
| 26 | Air pipe |
| 27 | Diffuser |

## Claims

1. A purification plant for purifying waste water comprising a septic tank and a purification unit comprising an upper part comprising four compartments (6, 7, 9, 10), namely two separated aerated compartments (6, 9), i.e. a first and a second compartment provided with bio filters and two separated non-aerated sedimentation compartments (7, 10), a first and a second, placed down-stream respectively of the first and second aerated compartments (6, 9), said purification unit having a lower part (20) placed below one or both aerated compartments (6, 9), **characterized in that** the lower part (20) comprises a receiving section provided with an inlet (2) for holding low-oxygen containing waste water from the septic tank, **in that** the purification unit comprises two diffusers, each placed beneath the bio filter in the first (6) and second (9) aerated compartments, and **in that** the first aerated compartment (6), which is larger than the second aerated compartment (9), is adapted to contain 55% to 85% vol% of the liquid volume of the total amount of liquid in the two aerated compartments (6, 9).

2. A purification plant according to claim 1, **characterized in that** the first aerated compartment (6) is adapted to contain 64-70% vol% of the liquid volume of the total amount of liquid in the two aerated compartments (6, 9), and the second aerated compartment (9) is adapted to contain 30-36% vol% of the liquid volume of the total amount of liquid in the two aerated compartments (6, 9).

3. A purification plant according to any preceding claim, **characterized in that** the purification unit is constructed as a closable box comprising an open container with a removable cover.

4. A purification plant according to claim 3, **characterized in that** the container comprises an outer wall (1) having an inner surface which inner surface is in direct contact with the waste water to be purified.

5. A purification plant according to claim 4, **characterized in that** the container is provided with at least one inner wall (11) forming at least two completely separated wet compartments (6, 9).

6. A purification plant according to any preceding claim, **characterized in that** the material forming the outer wall (1) of the upper part (21) also forms the outer wall of the lower part (20).

7. A purification plant according to any preceding claim, **characterized in that** the lower part (20) is provided as an open room between the bottom (23) of the upper part (21) and the bottom of the purification unit (24).

8. A purification plant according to any preceding claim, **characterized in that** the receiving section of the lower part (20) consist of more than 75 vol% of the lower part (20).

9. A purification plant according to any preceding claim, **characterized in that** the first aerated compartment (6) is provided with an inlet for liquid near the top of the compartment and an outlet near the bottom of the compartment, the first sedimentation compartment (7) is provided with an inlet at the bottom of the compartment and an outlet near the top of the compartment, the second aerated compartment (9) is provided with an inlet for liquid near the top of the compartment and an outlet near the bottom of the compartment, and the second sedimentation compartment (10) is provided with an inlet at the bottom of the compartment and an outlet (4a) near the top of the compartment.

10. A purification plant according to any of claims 3-9, **characterized in that** the smallest cross-direction of the removable cover is less than 150 cm, normally it is less than 120 cm.

11. A purification plant according to claim 1, 9 or 10, **characterized in that** the purification unit comprises a raising compartment (14) through which the liquid from the receiving section of the lower part (20) is transported to a high level of the first aerated compartment (6).

12. A purification plant according to any preceding claim, **characterized in that** the plant comprises means for phosphorous precipitating comprising recycling means (3) for recycling water containing oxygen or oxygen containing compounds to the pre-precipitation tank or if a phosphorous precipitation unit is present to either the pre-precipitation tank or the phosphorous precipitation unit.

## Patentansprüche

1. Reinigungsanlage zur Reinigung von Abwasser, umfassend einen Faulbehälter und eine Reinigungseinheit, umfassend einen oberen Teil mit vier Räumen (6,7,9,10) und zwar zwei getrennte durchlüftete Räume (6,9), d.h. ein erster und ein zweiter mit Biofiltern versehener Raum und zwei getrennte nicht-durchlüftete Sedimentierungsräume (7, 10), ein erster und ein zweiter, die stromabwärts von jeweils dem ersten und zweiten durchlüfteten Raum (6, 9) angeordnet sind, wobei die Reinigungseinheit einen unteren Teil (20) aufweist, der unter einem oder beiden durchlüfteten Räumen (6,9) angeordnet ist, **dadurch gekennzeichnet, dass** der untere Teil (20) einen Empfangsabschnitt mit einem Einlass (2) zum Halten von sauerstoffarmen Abwasser von dem Faulbehälter umfasst, dass die Reinigungseinheit zwei Luftverteiler umfasst, die jeweils unterhalb des Biofilters im ersten (6) und zweiten (9) durchlüfteten Raum angeordnet sind, und dass der erste durchlüftete Raum (6), der größer als der zweite durchlüftete Raum (9) ist, eingerichtet ist, um 55% bis 85% Vol-% des flüssigen Volumens der gesamten Menge von Flüssigkeit in den zwei durchlüfteten Räumen (6,9) zu enthalten.

2. Reinigungsanlage nach Anspruch 1, **dadurch gekennzeichnet, dass** der erste durchlüftete Raum (6) eingerichtet ist, um 64-70% Vol-% des flüssigen Volumens der gesamten Menge von Flüssigkeit in den zwei durchlüfteten Räumen (6, 9) zu enthalten, und der zweite durchlüftete Raum (9) eingerichtet ist, um 30-36% Vol-% des flüssigen Volumens der gesamten Menge von Flüssigkeit in den zwei durchlüfteten Räumen (6, 9) zu enthalten.

3. Reinigungsanlage nach einem der vorgehenden Ansprüche, **dadurch gekennzeichnet, dass** die Reinigungseinheit als ein schließbares Behältnis, umfassend einen offenen Behälter mit einem entfernbaren Deckel, ausgebildet ist.

4. Reinigungsanlage nach Anspruch 3, **dadurch gekennzeichnet, dass** der Behälter eine Außenwand (1) mit einer inneren Oberfläche umfasst, welche innere Oberfläche mit dem zu reinigen Abwasser in direktem Kontakt ist.

5. Reinigungsanlage nach Anspruch 4, **dadurch gekennzeichnet, dass** der Behälter mit mindestens einer inneren Wand (11), die mindestens zwei vollständig getrennte Nassräume (6, 9) bildet, versehen ist.

6. Reinigungsanlage nach einem der vorgehenden Ansprüche, **dadurch gekennzeichnet, dass** das die Außenwand (1) des oberen Teils (21) bildende Material auch die Außenwand des unteren Teils (20) bildet.

7. Reinigungsanlage nach einem der vorgehenden Ansprüche, **dadurch gekennzeichnet, dass** der untere Teil (20) als eine offene Kammer zwischen dem Boden (23) des oberen Teils (21) und dem Boden der Reinigungseinheit (24) vorgesehen ist.

8. Reinigungsanlage nach einem der vorgehenden Ansprüche, **dadurch gekennzeichnet, dass** der Empfangsabschnitt des unteren Teils (20) aus mehr als 75 Vol-% des unteren Teils (20) besteht.

9. Reinigungsanlage nach einem der vorgehenden Ansprüche, **dadurch gekennzeichnet, dass** der erste durchlüftete Raum (6) mit einem Einlass für Flüssigkeit in der Nähe des Oberteils des Raums und einem Auslass in der Nähe des Bodens des Raums versehen ist, der erste Sedimentierungsraum (7) mit einem Einlass am Boden des Raums und einem Auslass in der Nähe des Oberteils des Raums versehen ist, der zweite durchlüftete Raum (9) mit einem Einlass für Flüssigkeit in der Nähe des Oberteils des Raums und einem Auslass in der Nähe des Bodens des Raums versehen ist, und der zweite Sedimentierungsraum (10) mit einem Einlass am Boden des Raums und einem Auslass (4a) in der Nähe des Oberteils des Raums versehen ist.

10. Reinigungsanlage nach einem der Ansprüche 3-9, **dadurch gekennzeichnet, dass** der kleinste Querschnitt des entfernbaren Deckels weniger als 150 cm, normalerweise weniger als 120 cm, ist.

11. Reinigungsanlage nach den Ansprüchen 1, 9 oder 10, **dadurch gekennzeichnet, dass** die Reinigungseinheit einen aufsteigenden Raum (14) umfasst, durch welchen die Flüssigkeit vom Empfangsabschnitt des unteren Teils (20) zu einem hohen Niveau des ersten durchlüfteten Raums (6) transportiert wird.

12. Reinigungsanlage nach einem der vorgehenden Ansprüche, **dadurch gekennzeichnet, dass** die Anlage Mittel zur Phosphorausfällung, umfassend Rückführungsmittel (3) zum Rückführen von sauerstoffhaltigem Wasser oder sauerstoffhaltigen Verbindungen zum Vorausfällungsbehälter oder, wenn eine Phosphorausfällungseinheit vorhanden ist, entweder zum Vorausfällungsbehälter oder zur Phosphorausfällungseinheit.

## Revendications

1. Installation de purification pour la purification d'eaux usées comprenant une fosse septique et une unité de purification comprenant une partie supérieure comprenant quatre compartiments (6, 7, 9, 10), à savoir deux compartiments séparés aérés (6, 9) à savoir un premier et un deuxième compartiment muni de filtres biologiques et deux compartiments de sédimentation séparés et non-aérés (7, 10), un premier et un deuxième, placés en aval, respectivement, du premier et du deuxième compartiment aéré (6, 9), ladite unité de purification ayant une partie inférieure (20) placée au-dessous d'un ou des deux compartiments aérés (6,9), **caractérisée en ce que** la partie inférieure (20) comprend une section de réception pourvue d'une entrée (2) pour retenir des eaux usées à faible teneur en oxygène de la fosse septique, **en ce que** l'unité de purification comprend deux diffuseurs chacun placé au-dessous du filtre biologique dans les premier (6) et deuxième (9) compartiments aérés, et **en ce que** le premier compartiment aéré (6), qui est supérieur au deuxième compartiment aéré (9), est adapté de manière à contenir 55 à 85% en volume du volume de liquide de la quantité totale de liquide dans les deux compartiments aérés (6, 9).

2. Installation de purification selon la revendication 1, **caractérisée en ce que** le premier compartiment aéré (6) est adapté de manière à contenir 64 à 70% en volume du volume de liquide de la quantité totale de liquide dans les deux compartiments aérés (6, 9) et le deuxième compartiment aéré (9) est adapté de manière à contenir 30 à 36% en volume du volume de liquide de la quantité totale de liquide dans les deux compartiments aérés (6, 9).

3. Installation de purification selon l'une quelconque des revendications précédentes, **caractérisée en ce que** l'unité de purification réalisée dans la forme d'une boîte pouvant être fermée, comprenant un récipient ouvert avec un couvercle amovible.

4. Installation de purification selon la revendication 3, **caractérisée en ce que** le récipient comprend une paroi extérieure (1) ayant une surface intérieure, ladite surface intérieure étant en contact direct avec des eaux usée à épurer.

5. Installation de purification selon la revendication 4, **caractérisée en ce que** le récipient est pourvu d'au moins une paroi inférieure (11) formant au moins deux compartiments complètement séparés humides (6, 9).

6. Installation de purification selon l'une quelconque des revendications précédentes, **caractérisée en ce que** le matériau formant la paroi extérieure (1) de la partie supérieure (21) forme également la paroi extérieure de la partie inférieure (20).

7. Installation de purification selon l'une quelconque des revendications précédentes, **caractérisée en ce que** la partie inférieure (20) est pourvue comme un espace ouvert entre le fond (23) de la partie supérieure (21) et le fond de l'unité de purification (24).

8. Installation de purification selon l'une quelconque des revendications précédentes, **caractérisée en ce que** la section de réception de la partie inférieure (20) est composée de plus de 75% en volume de la partie inférieure (20).

9. Installation de purification selon l'une quelconque des revendications précédentes, **caractérisée en ce que** le premier compartiment aéré (6) est pourvu d'une entrée pour le liquide à proximité du haut du compartiment et d'une sortie à proximité du fond du compartiment, le premier compartiment de sédimentation (7) étant pourvu d'une entrée au fond du compartiment et une sortie à proximité du haut du compartiment, le deuxième compartiment aéré (9) étant pourvu d'une entrée pour le liquide à proximité du haut du compartiment et d'une sortie à proximité du fond du compartiment, et le deuxième compartiment de sédimentation (10) étant pourvu d'une entrée au fond du compartiment et une sortie (4a) à proximité du haut du compartiment.

10. Installation de purification selon l'une quelconque des revendications 3 à 9, **caractérisée en ce que** la plus petite direction transversale du couvercle amovible est inférieure à 150 cm, généralement elle est inférieure à 120 cm.

11. Installation de purification selon la revendication 1, 9 ou 10, **caractérisée en ce que** l'unité de purification comprend un compartiment d'élévation (14) à travers lequel le liquide venant de la section de réception de la partie inférieure (20) est transporté à un haut niveau du premier compartiment aéré (6).

12. Installation de purification selon l'une quelconque des revendications précédentes, **caractérisée en ce que** l'installation comprend des moyens pour la précipitation du phosphore comprenant des moyens de recyclage (3) pour le recyclage de l'eau contenant de l'oxygène ou des composés contenant de l'oxygène à la cuve de pré-précipitation ou si une unité de précipitation du phosphore est présente soit à la cuve de pré-précipitation soit à l'unité de précipitation du phosphore.
